# FASCICULE DE BREVET EUROPEEN

(11) **EP 0 485 270 B1**
(45) Date de publication et mention de la délivrance du brevet: **25.01.1995**
(21) Numéro de dépôt: 91402948.3
(22) Date de dépôt: 05.11.1991
(51) Int. Cl.: B01F 3/04, C02F 3/24, C02F 1/78

(54) **Installation pour le traitement d'un fluide par un gaz tel qu'une ozonation d'eau à purifier**
Vorrichtung zur Behandlung von einem Fluid wie z.B. einer Ozonisierung von Abwässern
Apparatus for treating a fluid with gas such as an ozonisation of waste water

(30) Priorité: 06.11.1990 FR 9013770
(43) Date de publication de la demande: 13.05.1992
(73) Titulaire: SAFEGE SOCIETE ANONYME FRANCAISE D'ETUDES ET DE GESTION, F-92000 Nanterre (FR)
(72) Inventeur: Patrier, Lionel, F-92500 Rueil Malmaison (FR)
(74) Mandataire: de Saint-Palais, Arnaud Marie

(56) Documents cités:
- EP-A- 0 073 415
- BE-A- 514 514
- US-A- 2 355 808
- US-A- 3 523 891
- US-A- 4 028 246

## Description

La présente invention concerne une installation pour le traitement d'un liquide par un gaz.

Elle s'applique notamment, mais non exclusivement, aux traitements de potabilisation des eaux par ozonation.

On sait que ce procédé consiste à assurer une mise en contact aussi intime que possible de l'eau à traiter avec de l'air ozoné, de manière à exploiter les propriétés de l'ozone, aussi bien en ce qui concerne son pouvoir désinfectant et microbicide, que ses réactions d'ozonisation et d'ozonolyse qui conduisent à scinder les molécules des composés organiques présents dans l'eau en améliorant ainsi les traitements de filtrage subséquents notamment à l'aide de charbon actif.

Habituellement, le traitement d'ozonation consiste à faire circuler, de préférence à contre-courant, un flux d'air ozoné dans un courant d'eau à traiter. A cet effet, on fait circuler l'eau à traiter de haut en bas d'un récipient (réacteur) dont le fond est muni de dispositifs d'injection d'air ozoné convenablement répartis. Ces dispositifs d'injection qui consistent le plus souvent en des disques en matière poreuse (alumine) sont conçus de manière à produire dans l'eau un flux ascendant de bulles qui circule sur toute la hauteur du récipient en multipliant ainsi les contacts ozone/eau.

Il s'avère, cependant, que les dispositifs utilisés jusqu'ici pour effectuer ce type de traitement présentent un inconvénient important dû au fait que l'écoulement de l'eau à l'intérieur du réacteur n'est pas uniforme et qu'entre la zone d'admission d'eau à la partie supérieure du réacteur et la zone de reprise à la partie inférieure du réacteur, il se produit à la fois des courts-circuits hydrauliques (liaisons privilégiées à vitesse d'écoulement relativement élevée) et des zones de stagnation dans lesquelles la vitesse d'écoulement est plus lente.

En conséquence, à la sortie du réacteur, l'eau consistera en un mélange d'eau fortement traitée (qui émane des zones de stagnation) et d'eau faiblement traitée (qui émane des zones de court-circuit hydraulique). De ce fait, si l'on ne prend pas de précautions suffisantes, l'eau risque de ne pas être suffisamment traitée.

Pour supprimer ce risque, on réduit le débit de l'eau circulant dans le réacteur ou l'on surdimensionne ce dernier.

L'invention a donc plus particulièrement pour but de supprimer ces inconvénients.

Elle propose à cet effet une installation comprenant un réacteur se présentant sous la forme d'une cuve fermée comportant :
- dans sa partie supérieure, une multiplicité de goulottes de distribution uniformément réparties dans un plan de section droite de la cuve, ces goulottes de distribution consistant en des tubes connectés à un circuit de distribution de liquide à traiter et munis d'une pluralité de perçages calibrés, la section des goulottes et celle des perçages étant déterminées de manière à ce que la perte de charge le long des goulottes soit négligeable et que le débit de liquide injecté par chaque orifice calibré soit le même ; et
- dans sa partie inférieure, une multiplicité de drains de reprise, uniformément répartis dans un plan de section droite de la cuve, ces drains étant connectés à un circuit de reprise d'eau traitée et étant munis d'une pluralité d'orifices calibrés dont la section ainsi que celle des drains sont déterminées de manière à obtenir une vitesse d'écoulement constante du liquide tout au long de chacun des drains et un débit de liquide collecté identique pour chaque orifice, les susdits moyens d'injection de gaz étant uniformément répartis dans un plan de section droite de la cuve située au-dessus des drains de reprise.

Un mode d'exécution de l'invention sera décrit ci-après, à titre d'exemple non limitatif, avec référence aux dessins annexés dans lesquels :

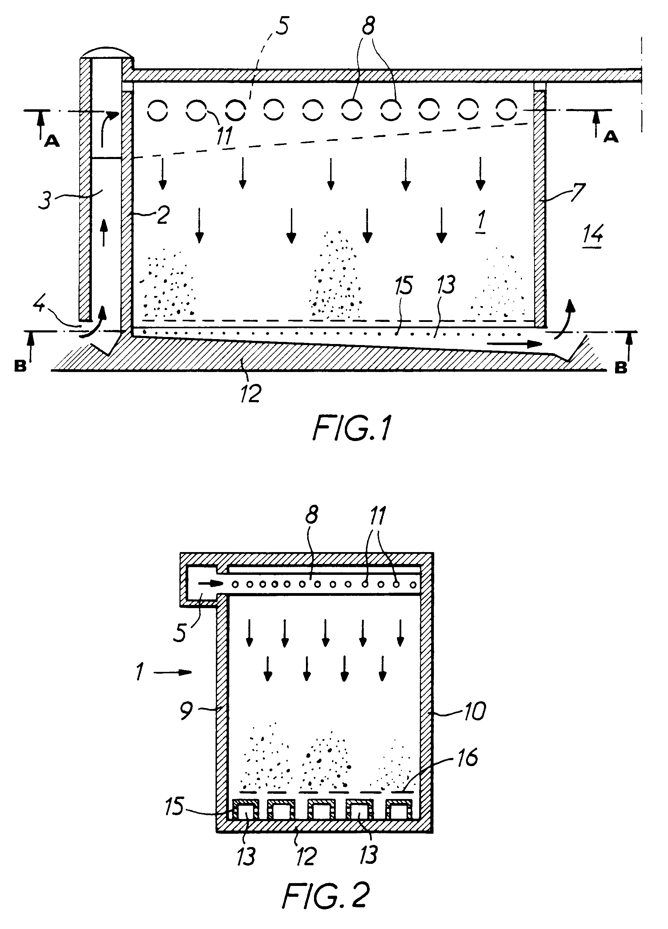

La figure 1 est une coupe verticale longitudinale d'un dispositif de traitement selon l'invention ;
La figure 2 est une coupe verticale transversale du dispositif représenté sur la figure 1 ;

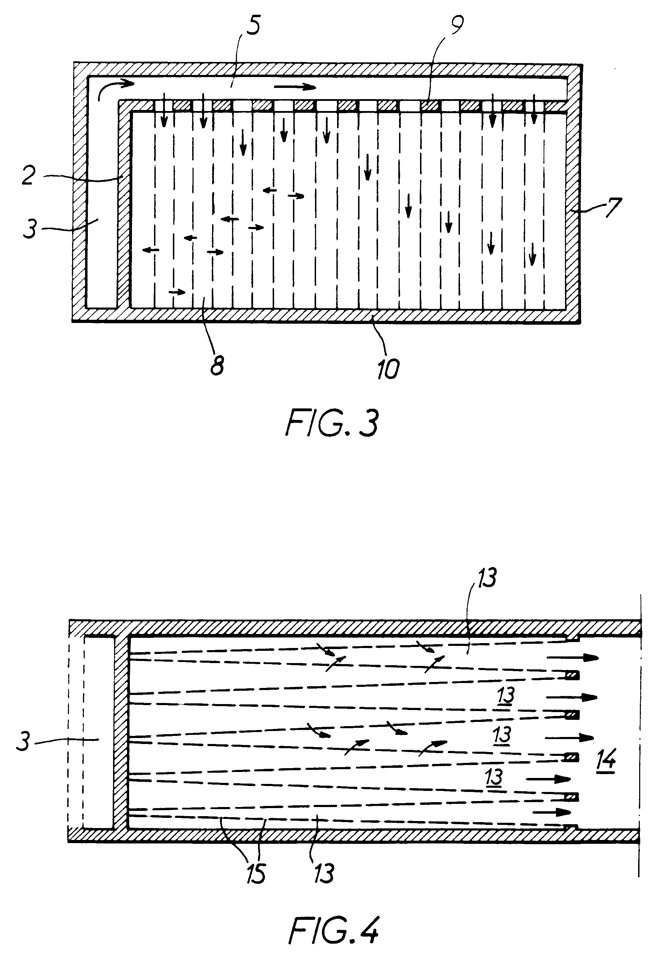

Les figures 3 et 4 sont des coupes horizontales selon les plans A/A et B/B du dispositif représenté figure 1.

Dans l'exemple représenté sur ces dessins, le dispositif de traitement fait intervenir une cuve 1 sensiblement parallélépipédique dont une paroi transversale verticale 2 est doublée de manière à constituer une chambre d'admission 3 d'eau à traiter reliée à un conduit d'admission, par un orifice 4.

Cette chambre d'admission 3 communique, dans sa partie supérieure, avec un canal de répartition 5 formé à l'extérieur de la cuve 1 contre la partie supérieure de l'une des parois longitudinales 9 de la cuve 1.

Ce canal de répartition 5 s'étend horizontalement avec une section allant en décroissant depuis la face transversale 2 au niveau de laquelle il communique avec la chambre 3, jusqu'à la face transversale 7 de la cuve 1.

Du canal de répartition partent une pluralité de goulottes de distribution 8 qui traversent de part en part la cuve 1 dans un plan horizontal, perpendiculairement aux parois longitudinales 9, 10.

Comme précédemment mentionné, ces goulottes 8 sont uniformément réparties dans le plan de section droite A/A et présentent chacune une multiplicité d'orifices d'injection d'eau 11, le diamètre de ces orifices 11 et la section de la goulotte 8 étant déterminés de manière à ce que le débit d'eau injecté soit le même dans tous les orifices 11 (perte de charge négligeable le long de la goulotte 8).

Le fond 12 de la cuve 1 est, quant à lui, muni d'une pluralité de drains de reprise 13 axés normalement aux goulottes de distribution 8 et qui débouchent dans une chambre de reprise 14 située à l'opposé de la chambre d'admission 3.

Ces drains de reprise 13 présentent une section (ici carrée ou rectangulaire) qui va en augmentant dans le sens d'écoulement du liquide (en direction de la chambre de reprise 14). Ils comprennent une multiplicité d'orifices latéraux 15 distribués uniformément sur leurs faces latérales, et présentant une section telle que, compte tenu de la forme des drains 13, ils aient un même débit (la vitesse d'écoulement à l'intérieur des drains étant constante).

Bien entendu, le dispositif précédemment décrit comprend des moyens d'injection d'air ozoné, ces moyens d'injection consistant en des éléments poreux 16 uniformément répartis dans un plan de section droite situé au-dessus des drains de reprise 13. En fait, ces moyens d'injection 16 produisent une multiplicité de bulles qui s'élèvent, à contre-courant, à l'intérieur de la cuve 1.

Grâce au fait que l'écoulement de l'eau à l'intérieur de la cuve 1 s'effectue de façon uniforme sur toute sa section avec une vitesse d'écoulement égale en chaque point de cette section, on obtient une qualité optimale du traitement. Il est donc possible, à qualité égale, de réduire les dimensions et le coût du dispositif.

En outre, grâce aux dispositions précédemment décrites, il est possible de faire circuler le flux d'ozone dans le sens d'écoulement de l'eau : Il suffit, en effet, d'utiliser les goulottes de distribution en tant que drains de reprise et inversement les drains de reprise en tant que goulottes de distribution.

## Revendications

1. Installation pour le traitement d'un liquide par un gaz, cette installation comprenant un réacteur se présentant sous la forme d'une cuve fermée (1) dans laquelle circule le liquide, et incluant des moyens permettant de faire circuler à l'intérieur de cette cuve un flux de gaz de traitement,
caractérisée en ce que ladite cuve comprend en outre :
- dans sa partie supérieure, une multiplicité de goulottes de distribution (8) uniformément réparties dans un plan horizontal de section droite de la cuve (1), ces goulottes de distribution (8) consistant en des tubes connectés à un circuit de distribution (5) du liquide à traiter et munis d'une pluralité de perçages calibrés (11), la section des goulottes (8) et celle des perçages (11) étant déterminées de manière à ce que la perte de charge le long des goulottes (8) soit négligeable et que le débit de liquide injecté par chaque orifice calibré (11) soit le même ; et
- dans sa partie inférieure, une multiplicité de drains de reprise (13) uniformément répartis dans un plan de section droite de la cuve (1), ces drains étant munis d'une pluralité d'orifices calibrés (15) dont la section, ainsi que celle des drains, sont déterminées de manière à obtenir une vitesse d'écoulement constante du liquide tout au long de chacun des drains (13) et un débit de liquide collecté identique pour chaque orifice (15), les susdits moyens d'injection de gaz (16) étant uniformément répartis dans un plan de section droite de la cuve situé au-dessus des drains de reprise.

2. Installation selon la revendication 1,
caractérisée en ce que le susdit traitement est une ozonation d'eau à purifier et, en conséquence, le susdit liquide est de l'eau, tandis que le gaz est de l'air ozoné.

3. Installation selon l'une des revendications 1 et 2,
caractérisée en ce que la susdite cuve (1) est sensiblement parallélépipédique, comprend une paroi transversale (2) doublée de manière à constituer une chambre d'admission (3) de liquide, et est munie d'un canal de répartition (5) formé à l'extérieur contre la partie supérieure de l'une des parois longitudinales (9) de la cuve (1), ce canal de répartition communiquant, d'une part, avec la chambre d'admission et, d'autre part, avec une multiplicité de goulottes de distribution (8) qui traversent la cuve, perpendiculairement à ladite paroi longitudinale (9).

4. Installation selon la revendication 3,
caractérisée en ce que la section du canal de répartition (5) va en décroissant, en s'éloignant de la chambre d'admission (3).

5. Installation selon l'une des revendications précédentes,
caractérisée en ce que les susdits drains de reprise (13) sont orientés perpendiculairement aux goulottes de distribution (8).

6. Installation selon l'une des revendications précédentes,
caractérisée en ce que la section des drains va en croissant dans le sens de l'écoulement du liquide.

7. Installation selon l'une des revendications précédentes,
caractérisée en ce que les drains ont une section carrée ou rectangulaire et présentent des faces latérales munies d'une pluralité d'orifices calibrés (15).

8. Installation selon l'une des revendications 1-7,
caractérisée en ce qu'à l'intérieur de la cuve, le gaz circule à contre-courant.

9. Installation selon l'une des revendications 1-7,
caractérisée en ce qu'à l'intérieur de la cuve, le gaz circule à co-courant.

## Claims

1. Installation for the treatment of a liquid by a gas, this installation comprising a reaction vessel in the form of a closed tank (1) in which the liquid circulates, and including a means enabling a flow of treatment gas to be made circulate inside this tank,
characterized in that said tank further comprises:
- in its upper part, a multiplicity of distribution chutes (8) evenly distributed over a horizontal plane of cross section of the tank (1), these distribution chutes (8) consisting of tubes connected to a circuit (5) for distributing the liquid to be treated and equipped with a plurality of calibrated bores (11), the cross section of the chutes (8) and that of the bores (11) being determined so that the loss of load along the chutes (8) is negligible and that the flow rate of liquid injected through each calibrated orifice (11) is the same; and
- in its lower part, a multiplicity of recovery drains (13) evenly distributed in a plane of cross section of the tank (1), these drains being equipped with a plurality of calibrated orifices (15) of which the cross section and that of the drains are determined so as to obtain a constant flow speed of the liquid over the entire length of each of the drains (13) and an identical flow of liquid collected for each orifice (15), the above-mentioned gas injection means (16) being evenly distributed in a plane of cross section of the tank, situated above the recovery drains.

2. Installation as claimed in claim 1,
characterized in that said treatment is an ozonization of water to be treated and, consequently, said liquid is water, while the gas is ozoniferous air.

3. Installation as claimed in either claim 1 or 2,
characterized in that said tank (1) is substantially parallelepiped, comprises a transversal wall (2) lined or plated so as to constitute a liquid admission chamber (3), and is fitted with a distribution channel (5) formed on the outside against the upper part of one of the longitudinal walls (9) of the tank (1), this distribution channel communicating, on the one hand, with the admission chamber, and, on the other hand, with a multiplicity of distribution chutes (8) running right through the tank, perpendicularly to said longitudinal wall (9).

4. Installation as claimed in claim 3,
characterized in that the cross section of the distribution channel (5) gradually decreases, as it extends away from the admission chamber (3).

5. Installation as claimed in any one of the previous claims,
characterized in that said recovery drains (13) are orientated perpendicularly to the distribution chutes (8).

6. Installation as claimed in any one of the previous claims,
characterized in that the cross section of the drains gradually increases in the direction of flow of the liquid.

7. Installation as claimed in any one of the previous claims,
characterized in that the drains have a square or rectangular cross section and have lateral sides fitted with a plurality of calibrated orifices (15).

8. Installation as claimed in any one of the claims 1 to 7,
characterized in that the gas circulates countercurrent-wise inside the tank.

9. Installation as claimed in any one of the claims 1 to 7,
characterized in that the gas circulates current-wise inside the tank.

## Patentansprüche

1. Vorrichtung zur Behandlung einer Flüssigkeit mit Gas, wobei besagte Vorrichtung einen Reaktor in Form einer geschlossenen Wanne (1) aufweist, in welcher die Flüssigkeit umläuft und Mittel einschliesst, um innerhalb der besagten Wanne einen Behandlungsstrom umlaufen zu lassen,
dadurch gekennzeichnet, dass besagte Wanne ausserdem aufweist :
- in ihrem oberen Abschnitt, eine Vielzahl von regelmässig in einer horizontalen Querschnittsebene der Wanne (1) angeordneten Verteilerrinnen (8), wobei besagte Verteilerrinnen (8) aus Rohren bestehen, die an einen Verteilerkreis (5) für die zu reinigende Flüssigkeit angeschlossen und mit einer Vielzahl von kalibrierten Bohrungen (11) versehen sind und der Querschnitt der Rinnen (8) und der Bohrungen (11) so bestimmt wird, dass der Füllverlust entlang der Rinnen (8) unwesentlich ist und die durch jede kalibrierte Öffnung (11) eingeführte Flüssigkeitsmenge die gleiche ist ; und
- in ihrem unteren Abschnitt, eine Vielzahl von regelmässig in einer Querschnittsebene der Wanne (1) verteilten Abzugskanälen (13), wobei besagte Kanäle mit einer Vielzahl von kalibrierten Öffnungen (15) versehen sind, deren Querschnitt, sowie der der Kanäle, so bestimmt wird, dass eine regelmässige Abzugsgeschwindigkeit der Flüssigkeit entlang eines jeden Kanals (13) erreicht wird und für jede Öffnung (15) der gleiche Strom gesammelter Flüssigkeit, wobei besagte Gaseinführmittel (16) regelmässig in einer über der Ebene der Abzugskanäle angeordneten Querschnittsebene der Wanne verteilt sind.

2. Vorrichtung nach Anspruch 1,
dadurch gekennzeichnet, dass besagte Behandlung eine Ozonierung von zu reinigendem Wasser ist und die Flüssigkeit infolgedessen Wasser und das Gas ozonisierte Luft ist.

3. Vorrichtung nach einem der Ansprüche 1 und 2,
dadurch gekennzeichnet, dass die besagte Wanne (1) im wesentlichen quaderförmig ist und eine Querwand (2) aufweist, die so ausgekleidet ist, dass sie eine Aufnahmekammer (3) für die Flüssigkeit bildet und mit einem Verteilerkanal (5) versehen ist, der aussen entlang dem oberen Abschnitt einer der Längswände (9) der Wanne (1) gebildet wird und besagter Verteilerkanal einerseits mit der Aufnahmekammmer und andererseits mit einer Vielzahl von Verteilerrinnen (8) in Verbindung steht, welche sich senkrecht zu besagter Längswand (9) durch die Wanne erstrecken.

4. Vorrichtung nach Anspruch 3,
dadurch gekennzeichnet, dass sich der Querschnitt des Verteilerkanals (5) im Masse seiner Entfernung von der Aufnahmekammer (3) verringert.

5. Vorrichtung nach einem der vorhergehenden Ansprüche,
dadurch gekennzeichnet, dass besagte Abzugskanäle (13) senkrecht zu den Verteilerrinnen (8) ausgerichtet sind.

6. Vorrichtung nach einem eder vorhergehenden Ansprüche,
dadurch gekennzeichnet, dass sich der Querschnitt der Abzugskannäle in Richtung des Abflusses der Flüssigkeit vergrössert.

7. Vorrichtung nach einem der vorhergehenden Ansprüche,
dadurch gekennzeichnet, dass die Abzugskanäle einen quadratischen oder rechteckigen Querschnitt haben und ihre Seitenflächen eine Vielzahl von kalibrierten Öffnungen (15) aufweisen.

8. Vorrichtung nach einem der Ansprüche 1 bis 7,
dadurch gekennzeichnet, dass das Gas innerhalb der Wanne in Gegenstromrichtung umläuft.

9. Vorrichtung nach einem der Ansprüche 1 bis 7,
dadurch gekennzeichnet, dass das Gas im Inneren der Wanne in Stromrichtung umläuft.
